# EUROPÄISCHE PATENTSCHRIFT

(11) **EP 4 378 360 B1**
(45) Veröffentlichungstag und Bekanntmachung des Hinweises auf die Patenterteilung: **30.07.2025**
(21) Anmeldenummer: 23208491.3
(22) Anmeldetag: 08.11.2023
(51) Int. Cl.: A47J 36/16

(54) **ZWEITEILIGES GARGESCHIRR**
TWO-PART COOKWARE
VAISSELLE EN DEUX PARTIES

(30) Priorität: 01.12.2022 BE 202205980
(43) Veröffentlichungstag der Anmeldung: 05.06.2024
(73) Patentinhaber: Miele & Cie. KG, 33332 Gütersloh (DE)
(72) Erfinder: Hölscher, Britta, 30167 Hannover (DE)

(56) Entgegenhaltungen:
- EP-A1- 2 896 329
- WO-A1-2022/063506
- CH-A- 538 270
- US-A1- 2022 364 734

## Beschreibung

Die Erfindung betrifft ein zweiteiliges Gargeschirr.

Zur Zubereitung von Lebensmitteln, auch Gargut genannt, können verschiedene Arten von Gargeschirren wie z.B. Töpfe, Pfannen, Woks und dergleichen verwendet werden. Derartige Gargeschirre weisen üblicherweise einen einstückigen, d.h. integral ausgebildeten,

Gargeschirrkörper auf, welcher mit seiner flächigen Unterseite als Gargeschirrboden auf eine Kochstelle aufgestellt und von der Kochstelle mit Gas, elektrisch oder induktiv erhitzt werden kann. Vom Rand des Gargeschirrbodens erstreckt sich eine Gargeschirrwand und/oder eine Gargeschirrwandung senkrecht oder schräg entlang der vertikalen Achse nach oben, so dass vom Gargeschirrboden zusammen mit der Gargeschirrwand eine Garraum gebildet wird, um das Gargut auf der Oberseite des Gargeschirrbodens aufzunehmen und seitlich mittels der Gargeschirrwand zu halten.

Es ist ferner bekannt, derartige Gargeschirre zweiteilig auszubilden, so dass das zweiteilige Gargeschirr ein erstes, äußeres Gargefäß aufweist, welches wie zuvor beschrieben auf die Kochstelle aufgesetzt werden kann und das zweiteilige Gargeschirr mittels seines äußeren Gargefäßbodens und seiner äußeren Gargefäßwandung nach außen hin abschließt. Das zweiteilige Gargeschirr weist dann ferner ein zweites, inneres Gargefäß auf, welcher in das äußere Gargefäß eingesetzt werden kann. Das zweiteilige Gargeschirr schließt seinerseits mittels seines inneren Gargefäßbodens und seiner inneren Gargefäßwandung nach innen hin ab und bildet den Garraum des zweiteiligen Gargeschirrs aus.

Das zweiteilige Gargeschirr weist somit zwei Gargefäße auf, welche gemeinsam das zweiteilige Gargeschirr bilden und gemeinsam als das zweiteilige Gargeschirr verwendet werden können. Die beiden Gargefäße des zweiteiligen Gargeschirrs sind jedoch separat ausgebildet und zerstörungsfrei voneinander trennbar, um vom Benutzer separat gehandhabt, gereinigt, gefüllt und dergleichen zu werden.

Das Dokument WO 2022/063506 A1 offenbart ein zweiteiliges Geschirr.

Bei derartigen zweiteiligen Gargeschirren ist es bisher bekannt, dass das zweite, innere Gargefäß entlang der vertikalen Achse von oben in das erste, äußere Gargefäß eingesetzt und/oder hineingesteckt wird. Eine Verbindung von innerem Gargefäß und äußerem Gargefäß erfolgt bisher mittels eines Klemm- oder Bajonettverschlusses rein mechanisch.

Die Erfindung stellt sich somit die Aufgabe, die bekannten zweiteiligen Gargeschirre zu verbessern. Insbesondere sollen die Möglichkeiten der zerstörungsfrei lösbaren Verbindung der Gargefäße zweiteiliger Gargeschirre verbessert und/oder erweitert werden. In jedem Fall soll dies insbesondere möglichst einfach, kostengünstig, bauraumsparend, universell nutzbar, komfortabel, direkt zugänglich und/oder intuitiv nutzbar erfolgen. Zumindest soll eine Alternative zu den bekannten zweiteiligen Gargeschirren geschaffen werden.

Erfindungsgemäß wird dieses Problem durch ein zweiteiliges Gargeschirr mit den Merkmalen der unabhängigen Ansprüche gelöst. Vorteilhafte Ausgestaltungen und Weiterbildungen der Erfindung ergeben sich aus den nachfolgenden abhängigen Ansprüchen.

Somit betrifft die Erfindung zum einen ein zweiteiliges Gargeschirr mit einem ersten, vorzugsweise äußeren, Gargefäß, welches ausgebildet ist, auf einer Kochstelle eines Kochfelds erhitzt zu werden, und mit einem zweiten, vorzugweise inneren, Gargefäß, welches ausgebildet ist, von dem ersten Gargefäß, vorzugsweise in einem Innenraum des ersten Gargefäßes, aufgenommen zu werden.

Das zweiteilige Gargeschirr ist dadurch gekennzeichnet, dass das erste Gargefäß und das zweite Gargefäß ausgebildet sind, das zweite Gargefäß magnetisch an dem ersten Gargefäß, vorzugsweise im Innenraum des ersten Gargefäßes, zu halten.

Mit anderen Worten kann von dem einen Gargefäß auf das andere Gargefäß eine magnetische Anziehung ausgeübt werden. Dies kann den Halt zwischen den beiden Gargefäßen ermöglichen oder verbessern, da dies vergleichsweise einfach, direkt und intuitiv für den Benutzer anwendbar erfolgen kann.

Auch kann dies die Ausrichtung der beiden Gargefäße zueinander verbessern und präzise definieren, indem die magnetische Wirkung an bestimmten Positionen vorgesehen wird und diese Positionen der beiden Gargefäße einander anziehen können, was eine entsprechende Ausrichtung bewirken kann.

Ferner kann dies einen Spalt oder ein Spaltmaß zwischen den beiden Gargefäßen reduzieren und/oder die Funktion des zweiteiligen Gargeschirrs verbessern.

Erfindungsgemäß kann die magnetische Anziehung aufgrund ihrer Stärke, welche bei Verwendung eines Elektromagneten einstellbar und/oder steuerbar sein kann, einen definierten Anpressdruck zwischen den beiden Gargefäßen bewirken, welcher beispielsweise für einen entsprechenden Kontakt für sensorische Messungen wie insbesondere für Temperaturmessungen und/oder elektronische Verbindungen sowie Signalübertragungen vorteilhaft sein kann.

In jedem Fall kann durch eine magnetische Verbindung der beiden Gargefäße des erfindungsgemäßen zweiteiligen Gargeschirrs eine zerstörungsfrei lösbare Verbindung geschaffen werden, welche insbesondere Halt, Positionierung und/oder Anpresskraft verbessern kann. Auch können hierdurch weitere vorteilhafte Gestaltungsmöglichkeiten eines magnetischen Halts eröffnet werden, wie nachfolgend näher beschrieben werden wird.

Erfindungsgemäß weist das erste Gargefäß wenigstens einen Elektromagneten auf, welcher ausgebildet und eingerichtet ist, das zweite Gargefäß, vorzugsweise einen korrespondierenden Permanentmagneten des zweiten Gargefäßes, elektromagnetisch anzuziehen, oder umgekehrt. Somit kann auch das zweite Gargefäß wenigstens einen Elektromagneten aufweisen, welcher ausgebildet und eingerichtet ist, das erste Gargefäß, vorzugsweise einen korrespondierenden Permanentmagneten des ersten Gargefäßes, elektromagnetisch anzuziehen. Dies kann eine konkrete Umsetzung darstellen.

Auch kann dies die Gestaltungsmöglichkeiten erhöhen, indem die elektromagnetische Anziehung durch das Betreiben des Elektromagneten oder eben nicht ein- und ausgeschaltet werden kann, wodurch auch der Stromverbrauch reduziert werden und/oder die magnetische Anziehung lediglich dann vorliegen kann, falls diese gewünscht ist.

In jedem Fall kann eine elektrische Versorgung des Elektromagneten und ggfs. weiterer elektrischer und/oder elektronischer Komponenten wie einer Steuerungseinheit, eines Sende- und/oder Empfangselements sowie Sensoren und dergleichen durch eine induktive Übertragung elektrischer Energie, durch Energy Harvesting und/oder durch einen, vorzugsweise wiederaufladbaren, elektrischen Energiespeicher wie beispielsweise durch einen elektrischen Kondensator des zweiteiligen Gargeschirrs erfolgen. Diese Möglichkeiten können auch miteinander kombiniert werden.

Gemäß einem weiteren Aspekt der Erfindung ist der Elektromagnet ferner eingerichtet, den Permanentmagneten elektromagnetisch abzustoßen. Dies kann neben den zuvor beschriebenen Möglichkeiten eine weitere Funktion darstellen, um beispielsweise durch Umpolen des Elektromagneten seitens der Steuerungseinheit eine Abstoßung statt Anziehung zu bewirken. Hierdurch kann das zweite Gargefäß vom ersten Gargefäß weggedrückt werden, was einem Benutzer insbesondere bei einem ersten, äußeren Gargefäß und einem zweiten, inneren Gargefäß das Entnehmen des zweiten, inneren Gargefäßes aus dem ersten, äußeren Gargefäß erleichtern kann, insbesondere durch Hintergreifen eines durch das Abstoßen freigelegten Rands des zweiten, inneren Gargefäßes.

Gemäß einem weiteren Aspekt der Erfindung ist der Elektromagnet entlang der vertikalen Achse einem ersten Gargefäßboden abgewandt im oberen Bereich des ersten Gargefäßes, vorzugweise an einem Rand einer ersten Gargefäßwandung, und der Permanentmagnet entlang der vertikalen Achse einem zweiten Gargefäßboden abgewandt im oberen Bereich des zweiten Gargefäßes, vorzugweise an einem Rand einer zweiten Gargefäßwandung, angeordnet, oder umgekehrt. Hierdurch können der Elektromagnet und der Permanentmagnet von der Kochstelle als Quelle der Erhitzung und von elektromagnetischer Strahlung möglichst ferngehalten werden.

Gemäß einem weiteren Aspekt der Erfindung weist das zweiteilige Gargeschirr mehrere Elektromagnete und mehrere korrespondierende Permanentmagnete auf. Dies kann die elektromagnetische Wirkung entsprechend erhöhen und/oder verteilen.

Vorzugsweise sind die Elektromagnete in der Umfangsrichtung einer ersten Gargefäßwandung, vorzugsweise eines Rands einer ersten Gargefäßwandung, und die Permanentmagnete in der Umfangsrichtung einer zweiten Gargefäßwandung, vorzugsweise eines Rands einer zweiten Gargefäßwandung, verteilt, vorzugsweise gleichmäßig verteilt, angeordnet, oder umgekehrt. Dies kann für eine möglichst gleichmäßige elektromagnetische Wirkung sorgen.

Gemäß einem weiteren Aspekt der Erfindung weist das zweiteilige Gargeschirr eine Steuerungseinheit auf, welche ausgebildet und eingerichtet ist, den Elektromagneten zu betreiben. Dies kann eine konkrete Möglichkeit der Umsetzung darstellen. Auch kann die Steuerungseinheit weitere Funktionen übernehmen oder zumindest ermöglichen.

Gemäß einem weiteren Aspekt der Erfindung weist das zweiteilige Gargeschirr ein Sende-und/oder Empfangselement auf, welches ausgebildet und eingerichtet ist, drahtlos Daten zu senden und/oder zu empfangen. Entsprechend können sensorisch erfasste Daten sowie sonstige Informationen wie beispielsweise Statusinformationen eines Elektromagneten vom zweitteiligen Gargeschirr nach außerhalb an Dritte wie beispielsweise an ein Kochfeld und/oder an ein mobiles Endgerät eines Benutzers wie beispielsweise ein Smartphone, ein Tablet oder dergleichen gesendet werden. Zusätzlich oder alternativ können Weisungen beispielsweise zum Ein- und Ausschalten eines Elektromagneten sowie sonstige Informationen von außerhalb von Dritten wie beispielsweise von einem Kochfeld und/oder von einem mobilen Endgerät an das zweiteilige Gargeschirr gesendet und dort empfangen werden, um dessen Betrieb zu steuern oder zumindest zu beeinflussen. Dies kann die Anwendungs- und Gestaltungsmöglichkeiten erhöhen.

Gemäß einem weiteren Aspekt der Erfindung ist die Steuerungseinheit, vorzugsweise und das Sende- und/oder Empfangselement, in einem Gargeschirrgriff, vorzugsweise des ersten Gargefäßes, angeordnet. Dies kann eine konkrete Möglichkeit der Umsetzung darstellen. Insbesondere kann in einem Gargeschirrgriff ausreichend Bauraum vorhanden sein, welcher entsprechend genutzt werden kann, so dass kein zusätzlicher Bauraum geschaffen werden muss.

Gemäß einem weiteren Aspekt der Erfindung weist das erste Gargefäß wenigstens ein Sensorelement, vorzugsweise einen entlang der vertikale Achse ausgerichteten Wiegesensor und/oder einen Temperatursensor, auf, welches zwischen dem ersten Gargefäß und dem zweiten Gargefäß angeordnet ist, oder umgekehrt. Hierdurch können entsprechende Sensorinformationen wie Gewicht, Temperatur und dergleichen am zweiteiligen Gargeschirr erfasst werden, was eine Überwachung, Steuerung und Durchführung des Garprozesses für den Benutzer verbessern oder zumindest vereinfachen kann.

Gemäß einem weiteren Aspekt der Erfindung ist das zweiteilige Gargeschirr, vorzugsweise eine Steuerungseinheit des zweiteiligen Gargeschirrs, ausgebildet und eingerichtet, den elektromagnetischen Halt des zweiten Gargefäßes an dem ersten Gargefäß, vorzugsweise im Innenraum des ersten Gargefäßes, zu erhöhen, um eine Messung mittels des Sensorelements auszuführen. Mit anderen Worten kann durch eine Erhöhung der elektrischen Bestromung des Elektromagneten dessen elektromagnetische Anziehungskraft gegenüber dem Permanentmagneten erhöht werden, so dass über den reinen Halt hinaus ein Anziehen und/oder ein Anpressen zwischen den beiden Gargefäßen erreicht werden kann. Dies kann den Kontakt von Sensorelement und dem entsprechenden Gargefäß erhöhen, was sich beispielsweise bei einer Temperaturerfassung positiv auf die Qualität der Erfassung oder Messung auswirken kann.

Gemäß einem weiteren Aspekt der Erfindung ist das zweiteilige Gargeschirr, vorzugsweise eine Steuerungseinheit des zweiteiligen Gargeschirrs, ausgebildet und eingerichtet, den elektromagnetischen Halt des zweiten Gargefäßes an dem ersten Gargefäß, vorzugsweise im Innenraum des ersten Gargefäßes, aufzuheben, um eine Messung mittels des Sensorelements auszuführen. Somit kann der zuvor beschriebene Halt bewusst aufgegeben werden, um beispielsweise eine Erfassung des Gewichts von zweitem Gargefäß samt Gargut und dergleichen nicht durch die elektromagnetische Anziehung negativ zu beeinflussen und/oder zu verfälschen.

Gemäß einem weiteren Aspekt der Erfindung sind das erste Gargefäß und das zweite Gargefäß zueinander korrespondierend asymmetrisch und/oder formschlüssig ausgebildet. Dies kann korrespondierend oval, mehreckig oder dergleichen erfolgen. Auch kann dies durch formschlüssige Verbindungen wie beispielsweise Nut und Feder erfolgen. In jedem Fall kann dies den Halt und/oder die Positionierung zusätzlich konstruktiv also beispielsweise mechanisch verbessern.

Gemäß einem weiteren Aspekt der Erfindung weist das zweite Gargefäß einen zweiten Gargefäßboden und eine entlang der vertikalen Achse vom zweiten Gargefäßboden nach oben ragende zweite Gargefäßwandung auf, welche einen Garraum abschnittsweise umschließen. Somit kann ein Garraum seitens des zweiten, insbesondere inneren, Gargefäßes wie beispielsweise bei einem Topf, einer Pfanne oder einem Wok geschaffen werden, um Gargut dort aufzunehmen und dort einen Garprozess durchzuführen.

Die Erfindung betrifft zum anderen ein zweiteiliges Gargeschirr mit einem Gargefäß, welches ausgebildet ist, auf einer Kochstelle eines Kochfelds erhitzt zu werden.

Dieses zweiteilige Gargeschirr ist gekennzeichnet durch wenigstens einen Sensorträger, welcher wenigstens ein Sensorelement, vorzugsweise einen Temperatursensor, aufweist, wobei das Gargefäß und der Sensorträger ausgebildet sind, den Sensorträger magnetisch an dem ersten Gargefäß, vorzugsweise an einer Gargefäßwandung des ersten Gargefäßes, zu halten. Der Sensorträger kann eine geeignete Halterung oder dergleichen sein, welches zum einen wenigstens das eine Sensorelement aufnehmen und zum anderen magnetisch am Gargefäß oder an dessen Gargefäßkörper gehalten werden kann. So kann das Sensorelement zerstörungsfrei trennbar am Gargeschirr angebracht und wieder entfernt werden. Dies kann vergleichbar wie zuvor hinsichtlich des zweiteiligen Gargeschirrs mit zwei Gargefäßen beschrieben erfolgen, so dass die dort beschriebenen Eigenschaften und Vorteile vergleichbar auf das zweiteilige Gargeschirr mit Gargefäß und Sensorträger übertragen und angewendet werden können. Auch alle weiteren zuvor hinsichtlich des zweiteiligen Gargeschirrs mit zwei Gargefäßen beschriebenen Eigenschaften und Vorteile können vergleichbar auf das zweiteilige Gargeschirr mit Gargefäß und Sensorträger übertragen und angewendet werden.

Erfindungsgemäß weist das Gargefäß wenigstens einen Elektromagneten auf, welcher ausgebildet und eingerichtet ist, den Sensorträger, vorzugsweise einen korrespondierenden Permanentmagneten, elektromagnetisch anzuziehen, oder umgekehrt. Dies kann die Umsetzung oder Übertragung der entsprechenden zuvor beschriebenen Aspekte des zweiteiligen Gargeschirrs mit zwei Gargefäßen auf das zweiteilige Gargeschirr mit Gargefäß und Sensorträger ermöglichen.

Mit anderen Worten ist es bekannt, dass bei zwei ineinandergesteckten Gargefäßen wie beispielsweise Slowcooker, Multicooker oder Reiskochern mit herausnehmbaren Gefäßen innen die Gefäße lediglich ineinander gesteckt oder mit einem Klemm- oder Bayonettverschluss verbunden sein können. Die Verbindungen der handelsüblichen Gefäße in den zuvor genannten Geräten können rein mechanisch sein und weisen keine zusätzlichen Funktionen wie sensorgesteuerte Prozesse oder Interaktionen, um den Nutzer zu unterstützen, auf.

Erfindungsgemäß kann daher durch eine elektromagnetische Fixierung von zwei ineinanderliegenden Gefäßen diese beiden Gefäße deutlich präziser zueinander positioniert werden, z.B. mittels automatischer Ausrichtung durch elektromagnetische Zusammenfügung, beispielsweise unterstützt durch formale Ausprägungen, Konizität. Dadurch kann eine optimale Zusammenfügung mit minimalem Spaltmaß und/oder maximaler Funktion gewährleistet werden.

Bei der präzisen Positionierung durch elektromagnetische Zusammenfügung kann ein elektromagnetisch steuerbarer Magnet oder können mehrere elektromagnetisch steuerbare Magnete im oberen Rand der Gefäßwand oder am oberen Rand der Gefäßwand liegen und mit einer Elektronik in der Gefäßwand oder dem Griff verbunden sein. Die Elektronik kann mit einer Kommunikationsschnittstelle wie z.B. Bluetooth, ZigBee, W-LAN, RFID oder dergleichen ausgestattet sein und so mit dem Kochfeld, mit den Induktoren, die das Gefäß beheizen, oder mit einem externen Device wie beispielsweise einem Handy, einem Tablet oder dergleichen in Verbindung treten. Hierrüber können Signale für die Verbindung der Elektromagneten übermittelt werden. Alternativ könnte sich auch eine eigene (autarke) Steuerung im Gargefäß (I-Griff) befinden, die über ein Bedien-Ul am Gargefäß oder am Griff oder auch über ein externes Device angesteuert werden kann.

Das Gefäß kann vorzugsweise mindestens doppelwandig aufgebaut sein, so dass der Magnet sowie die Elektronik im Innern der Gefäßwandung Platz finden. Alternativ könnte die Einheit auch außen oder innen am oder im Gefäß angebracht sein, müsste aber entsprechend abgedichtet sein, damit bei der Reinigung des Gefäßes ein Kontakt mit Wasser vermieden wird.

An dem externen Innenteil des Garbehälters kann sich am oberen Rand der Wandung oder am oberen Rand selbst der magnetische Gegenpol befinden. Wenn diese beiden Pole zusammengeführt werden, also wenn das innere Gefäß in das äußere Gefäß gesetzt wird, können durch die Anziehungskraft der Magnete die beiden Gefäße zueinander positionier und eine sichere, stabile und feste Verbindung hergestellt werden. So kann das innere Gefäß nicht verrutschen oder verdrehen und ist in seiner Position fixiert.

Durch eine exakte formale Anpassung und Ausgestaltung, wie beispielsweise Konizität, kann eine verbesserte Zusammenfügung der beiden Elemente stattfinden. Alternativ kann diese Funktion zusätzlich durch entsprechende Rillen oder Nute in der Gefäßwandung und entsprechenden Gegenformen im Gefäß unterstützt werden. Alternativ könnte auch eine Asymmetrie der beiden Gefäße, wie beispielsweise eine fehlende Rotationssymmetrie, diese Funktion herstellen.

Durch eine elektromagnetische Fixierung von zwei ineinanderliegenden Gefäßen können diese beiden Gefäße auch über eine definierte Stärke des Magneten präzise in dem Anpressdruck der beiden Gefäße zueinander definiert sein. Dies kann relevant für sensorische Messungen, z.B. Temperaturmessungen, elektronische Verbindungen und/oder Signalübertragungen, sein. Dafür kann u.a. ein sehr hoher Anpressdruck benötigt werden, um eine möglichst direkte Übertragung ohne Verluste herzustellen. Für sensorische Messungen wie eine Wiegefunktion dagegen kann keine oder nur eine aufliegende Verbindung ohne magnetische Kräfte benötigt werden. In diesem Fall könnte die elektromagnetische Fixierung für diesen Moment gelöst werden.

Wenn somit wie zuvor beschrieben eine perfekte Zusammenfügung der beiden Gefäße hergestellt worden ist, kann der Anpressdruck der beiden Gefäße zueinander so definiert ausgestaltet werden, dass sensorgesteuerte Funktionen zwischen den beiden Gefäßen optimal unterstützt werden können, z.B. Temperatursensoren in der Außenwandung, die nur mit einer stabilen Verbindung zum Innengefäß ausreichend gute Messergebnisse liefern.

Für andere sensorgesteuerte Prozesse wie z.B. eine Wiegefunktion kann die Verbindung gelöst werden, insbesondere zeitlich begrenzt gelöst werden. Was genau, wann und wie gesteuert und benötigt wird, könnte sich aus einer digitalen Kochprozessanleitung ergeben, z.B. aus einem digitalen, rezeptgeführtem Kochprozess heraus. Beispielweise dann aufgrund der Aufforderung "Bitte geben Sie jetzt 125ml Sahne hinzu" speziell für diesen Prozessschritt die magnetische Verbindung der beiden Gefäße gelöst und der Wiegesensor aktiviert werden. Nach erfolgreichem Abschluss des Wiegeprozesses können die beiden Gargefäße wieder fest miteinander verbunden werden.

Durch eine elektromagnetische Fixierung von zwei ineinanderliegenden Gefäßen können diese beiden Gefäße ferner in der Zusammenfügung situativ und/oder prozessorientiert gesteuert werden, z.B. im Kochprozess eine sehr feste, von Hand nicht lösbare Verbindung aufweisen aber für die Reinigung kann sich das innere Gefäß lösen oder kann durch Umkehrung der Magnetpole dem Nutzer zur Verfügung gestellt werden oder dem Nutzer entgegenkommen im Fall von abstoßenden Polen.

In diesem Fall könnte durch Umkehrung der verschiedenen Pole dem Nutzer eine Unterstützung in der Orientierung im Kochprozess gegeben werden. Während der Benutzung des Gargefäßes kann die Verbindung so stabil sein, dass sich die beiden Gefäße nicht ohne großen Kraftaufwand lösen lassen. Wenn der Kochprozess abgeschlossen ist und das Innengefäß zur Reinigung entnommen werden soll, könnte durch die Abstoßung der Magnete das Innengefäß nach oben gedrückt werden und dem Nutzer sozusagen "entgegenkommen". Durch die Erhöhung des Innengefäßes zum Außengefäß kann sich eine gute Greifkante am oberen Rand des Innengefäßes ergeben, so dass dieses problemlos entnommen werden kann.

In jedem Fall könnten alternativ oder auch zusätzlich ausschließlich spezielle Teilbereiche mittels elektromagnetischer Fixierung am Gargefäß befestigen werden, z.B. eine Leiste oder ein Gehäuse, das mit verschiedenen Sensoren ausgestattet ist und mittels elektromagnetischer Kraft eine feste Verbindung mit dem Gargefäßkörper herstellen kann. Dies können einzelne oder mehrere Sensoren, Leisten, Gehäuse etc. sein, die situativ, prozess- und/oder bedarfsorientiert einzeln angesteuert werden könnten. Die Sensoren könnten auch innerhalb des äußeren Gargefäßes liegen, wie beispielsweise am inneren Rand oder innerhalb der Doppelwandigkeit, und dann speziell in diesem Bereich mit dem Innengefäß sehr eng magnetisch gehalten werden.

Generell könnte zu berücksichtigen sein, dass die Magnetfelder die induktive Aufheizung des Innenbehälters nicht beeinträchtigen oder zerstören sollten. Deswegen sollten die Magnete zur Fixierung des Innenbehälters möglichst weit von Kochfeld also beispielsweise außerhalb des induktiven Magnetfeldes des Kochfeldes liegen, um diese möglichst nicht oder nur minimal zu beeinträchtigen, also vorzugshalber möglichst weit oben am Rand des Gargefäß oder alternativ im oberen Bereich der Gargefäßwandung.

In jedem Fall kann erfindungsgemäß eine präzise Positionierung und/oder eine automatische Ausrichtung von zwei ineinanderliegenden Gargefäßen durch elektromagnetische Zusammenfügung ermöglicht werden. Zusätzlich oder alternativ kann ein minimales Spaltmaß und/oder eine maximale Funktion ermöglicht werden. Zusätzlich oder alternativ kann ein definierter Anpressdruck erreicht werden, was insbesondere für sensorische Messungen wie z.B. Temperaturmessungen oder elektronische Verbindungen oder Signalübertragungen vorteilhaft sein kann. Zusätzlich oder alternativ kann eine elektronisch und digital steuerbare Lösung der Verbindung ermöglicht werden, z.B. für sensorische Erfassung von Gewicht im Innengefäß, etwa im Rahmen einer Wiege-Funktion. Zusätzlich oder alternativ kann eine situativ und prozessorientiert steuerbare Zusammenfügung von zwei Gargefäßen ermöglicht werden. Dabei kann beispielsweise während eines Kochprozesses eine feste Verbindung und während einer Reinigung eine lose Verbindung bereitgestellt werden.

Mehrere Ausführungsbeispiele der Erfindung sind in den Zeichnungen rein schematisch dargestellt und werden nachfolgend näher beschrieben. Es zeigt
- Figur 1: einen Längsschnitt durch ein erfindungsgemäßes zweiteiliges Gargeschirr gemäß eines ersten Ausführungsbeispiels mit separierten Gargefäßen;
- Figur 2: die Darstellung der Figur 1 mit zusammengefügten Gargefäßen in einem anziehenden Zustand;
- Figur 3: die Darstellung der Figur 1 mit zusammengefügten Gargefäßen in einem abstoßenden Zustand;
- Figur 4: einen Längsschnitt durch ein erfindungsgemäßes zweiteiliges Gargeschirr gemäß eines zweiten Ausführungsbeispiels mit separiertem Gargefäß und Sensorträger;
- Figur 5: die Darstellung der Figur 4 mit zusammengefügtem Gargefäß und Sensorträger in einem anziehenden Zustand;
- Figur 6: einen Längsschnitt durch ein erfindungsgemäßes zweiteiliges Gargeschirr gemäß eines dritten Ausführungsbeispiels mit separierten Gargefäßen;
- Figur 7: die Darstellung der Figur 6 mit zusammengefügten Gargefäßen in einem anziehenden Zustand; und
- Figur 8: ein Kochfeld mit dem erfindungsgemäßem zweiteiligen Gargeschirr gemäß des ersten Ausführungsbeispiels und mit einem mobilen Endgerät als Smartphone.

Die o.g. Figuren werden in kartesischen Koordinaten betrachtet. Es erstreckt sich eine Längsachse X, welche auch als Tiefe X oder als Länge X bezeichnet werden kann. Senkrecht zur Längsachse X erstreckt sich eine Querachse Y, welche auch als Breite Y bezeichnet werden kann. Senkrecht sowohl zur Längsachse X als auch zur Querachse Y erstreckt sich eine vertikale Achse Z, welche auch als Höhe Z bezeichnet werden kann und der Richtung der Schwerkraft entspricht. Die Längsachse X und die Querrichtung Y bilden gemeinsam die Horizontale X, Y, welche auch als horizontale Ebene X, Y bezeichnet werden kann.

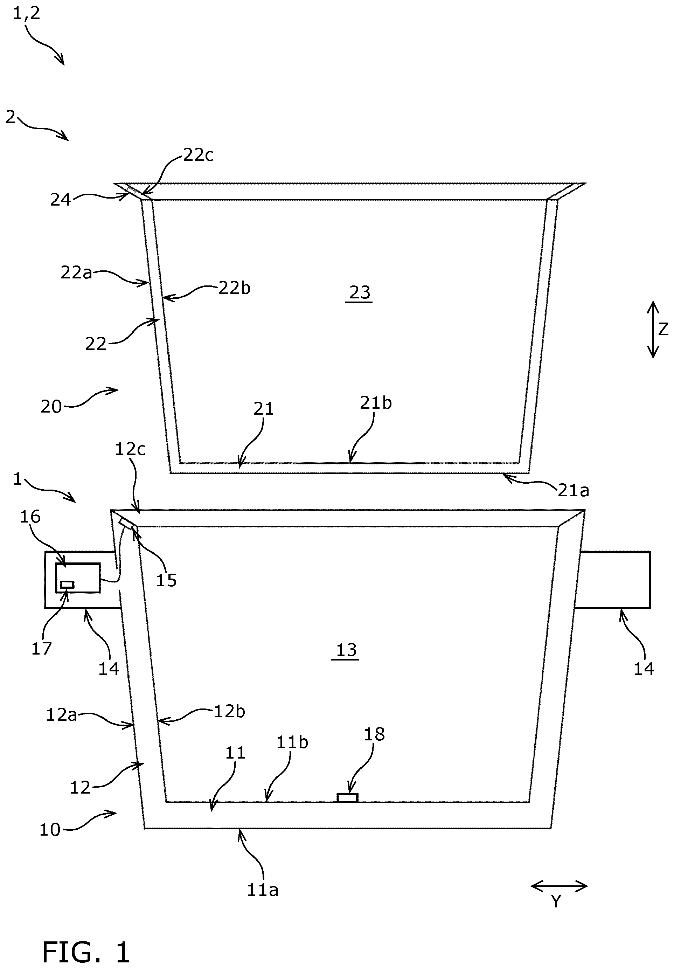

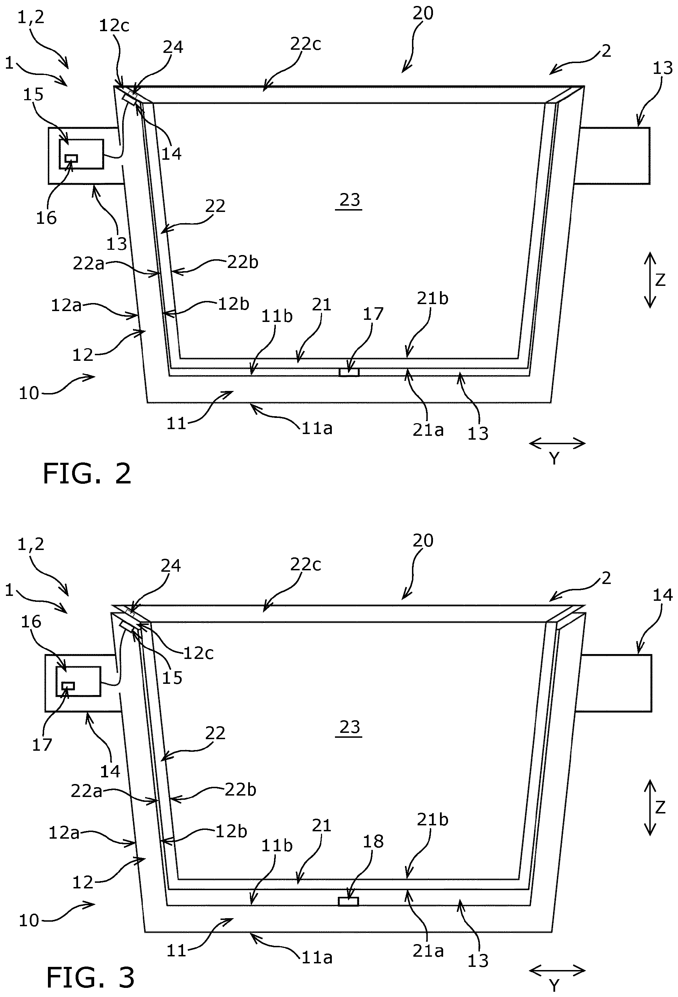

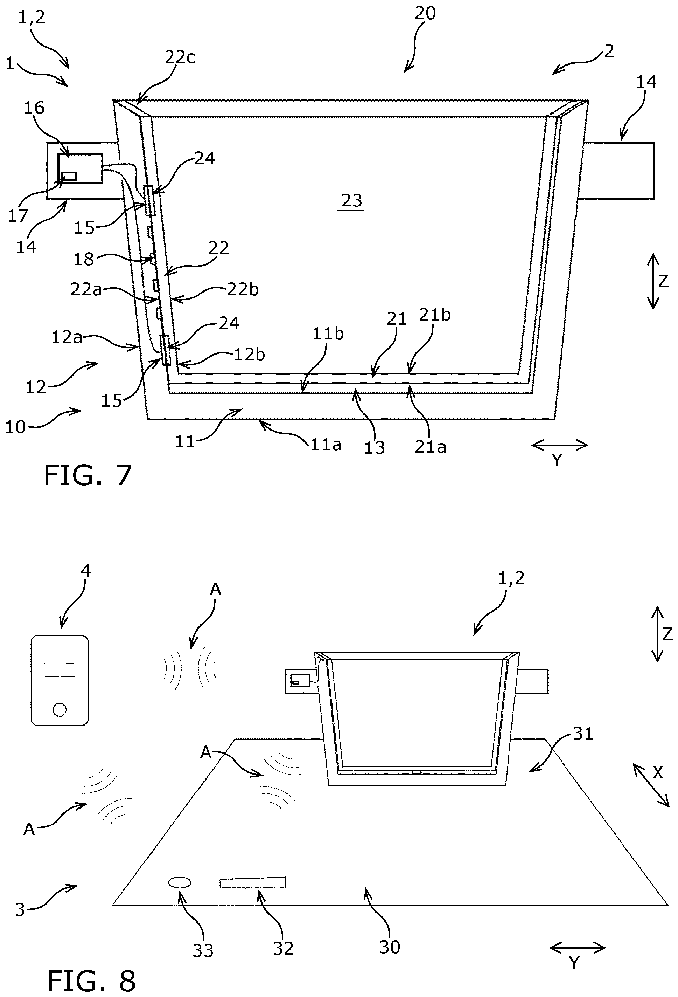

Figur 1 zeigt einen Längsschnitt durch ein erfindungsgemäßes zweiteiliges Gargeschirr 1, 2 gemäß eines ersten Ausführungsbeispiels mit separierten Gargefäßen 1, 2. Figur 2 zeigt die Darstellung der Figur 1 mit zusammengefügten Gargefäßen 1, 2 in einem anziehenden Zustand. Figur 3 zeigt die Darstellung der Figur 1 mit zusammengefügten Gargefäßen 1, 2 in einem abstoßenden Zustand. Figur 8 zeigt ein Kochfeld 3 mit dem erfindungsgemäßem zweiteiligen Gargeschirr 1, 2, gemäß des ersten Ausführungsbeispiels und mit einem mobilen Endgerät 4 als Smartphone 4.

Ein erfindungsgemäßes zweiteiliges Gargeschirr 1, 2 wird am Beispiel eines zweiteiligen Topfes 1, 2 betrachtet. Der zweiteilige Topf 1, 2 besteht aus einem ersten, äußeren Gargefäß 1 und aus einem zweiten, inneren Gargefäß 2.

Das erste, äußere Gargefäß 1 weist einen einstückig aus Metall ausgebildeten ersten, äußeren Gargefäßkörper 10 mit einem ersten, äußeren Gargefäßboden 11 auf, welcher sich kreisrund in der Horizontalen X, Y erstreckt. Mit einer Unterseite 11a des äußeren Gargefäßbodens 11 kann das äußere Gargefäß 1 auf einem Untergrund wie insbesondere auf einer Kochstelle 31 eines Kochfelds 3, vergleiche Figur 8, aufgestellt und beheizt werden. Entlang der vertikalen Achse Z nach oben und der Unterseite 11a gegenüberliegend weist der äußere Gargefäßboden 11 eine Oberseite 11b auf. Vom Rand des äußeren Gargefäßbodens 11 erstreckt sich einstückig eine erste, äußere Gargefäßwandung 12 im Wesentlichen senkrecht entlang der vertikalen Achse Z nach oben und schließt dort mit einem ringförmigen Rand 12c ab, welcher schräg radial nach innen und unten geneigt ist. Die äußere Gargefäßwandung 12 weist nach radial außen eine Außenseite 12a und gegenüberliegend nach radial innen eine Innenseite 12b auf. Der äußere Gargefäßboden 11 und die äußere Gargefäßwandung 12 umgeben gemeinsam, entlang der vertikalen Achse Z nach oben hin offen, einen Innenraum 13.

Nahe dem Rand 12c der äußeren Gargefäßwandung 12 weist diese einander diametral gegenüberliegend zwei Gargeschirrgriffe 14 auf. In dem in der Figur 1 linken Gargeschirrgriff 14 ist eine Steuerungseinheit 16 angeordnet, welche auch als Elektronik 16 bezeichnet werden kann. Dort ist ferner ein Sende-/Empfangselement 17 angeordnet, welches mit der Steuerungseinheit 16 energie- und datenübertragend verbunden ist. Nahe dem Gargeschirrgriff 14 mit der Steuerungseinheit 16 ist ein Elektromagnet 15 am Rand 12c der äußeren Gargefäßwandung 12 angeordnet und nach außen, d. h. zur schrägen ringförmigen Fläche des Rands 12c, hin ausgerichtet. Der Elektromagnet 15 ist elektrisch mit der Steuerungseinheit 16 verbunden, sodass der Elektromagnet 15 von der Steuerungseinheit 16 gespeist und betrieben werden kann. Mittig auf der Oberseite 11b des äußeren Gargefäßbodens 11 ist entlang der vertikalen Achse Z nach oben gerichtet ein Sensorelement 18 in Form eines Wiegesensors 18 angeordnet. Im Gargeschirrgriff 14 mit der Steuerungseinheit 16 ist ferner ein wiederaufladbarer elektrischer Energiespeicher (nicht dargestellt) vorgesehen, um wenigstens den Elektromagnet 15, die Steuerungseinheit 16, das Sende-/Empfangselement 17 sowie den Wiegesensor 18 elektrisch zu versorgen.

Das zweite, innere Gargefäß 2 weist korrespondierend zum äußeren Gargefäß 1 einen einstückig aus Metall ausgebildeten zweiten, inneren Gargefäßkörper 20 mit einem zweiten, inneren Gargefäßboden 21 auf, welcher sich ebenfalls kreisrund in der Horizontalen X, Y erstreckt. Der innere Gargefäßboden 21 weist entlang der vertikalen Achse Z nach unten hin eine Unterseite 21a und gegenüberliegend entlang der vertikalen Achse Z nach oben hin eine Oberseite 21b auf. Vom Rand des inneren Gargefäßbodens 21 erstreckt sich ebenfalls einstückig eine zweite, innere Gargefäßwandung 22 im Wesentlichen senkrecht entlang der vertikalen Achse Z sowie parallel zur äußeren Gargefäßwandung 12 des äußeren Gargefäßes 1 nach oben und schließt dort ihrerseits mit einem ringförmigen Rand 22c ab, welcher schräg radial nach außen und oben geneigt ist. Der ringförmige Rand 22c der inneren Gargefäßwandung 22 weist einen Permanentmagneten 24 auf. Die innere Gargefäßwandung 22 weist nach radial außen ein Außenseite 22a und gegenüberliegend nach radial innen eine Innenseite 22b auf. Der innere Gargefäßboden 21 und die äußere Gargefäßwandung 22 umgeben gemeinsam, entlang der vertikalen Achse Z nach oben hin offen, einen Garraum 23, welcher Gargut für eine Garprozess des zweiteiligen Gargeschirrs 1, 2 aufnehmen kann.

Das innere Gargefäß 2 des erfindungsgemäßen zweiteiligen Gargeschirrs 1, 2 kann vom Benutzer entlang der vertikalen Achse Z von oben in den Innenraum 13 des äußeren Gargefäßes 1 eingesetzt werden, siehe zum Beispiel Figur 1. Hierdurch liegt die schräge Unterseite des Rands 22c der inneren Gargefäßwandung 22 des inneren Gargefäß 2 flächig auf dem Rand 12c der äußeren Gargefäßwandung 12 des äußeren Gargefäßes 1 auf, siehe zum Beispiel Figur 2. Um dabei den Elektromagneten 15 des Rands 12c der äußeren Gargefäßwandung 12 etwa in Deckung mit dem Permanentmagneten 24 des Rands 22c der inneren Gargefäßwandung 22 zu bringen, können entsprechende nicht dargestellte optische und/oder haptische Markierungen für den Benutzer außen an den beiden Gargefäßen 1, 2 vorgesehen sein. Alternativ können die beiden Gargefäße 1, 2 zueinander korrespondierend geringfügig oval ausgebildet sein oder zueinander korrespondierende formschlüssige Elemente wie Nut und Feder aufweisen. In jedem Fall kann hierdurch eine wesentliche Positionierung von Elektromagnet 15 und Permanentmagnet 24 erfolgen.

Nun kann der Elektromagnet 15 mittels der Steuerungseinheit 16 vom Benutzer aktiviert werden, wodurch der Permanentmagnet 24 vom Elektromagnet 15 angezogen werden kann. Hierdurch kann eine Feinpositionierung, also eine exakte Ausrichtung in der Umfangsrichtung, erfolgen, indem der Permanentmagnet 24 und damit das innere Gargefäß 2 zu gedreht wird, dass der Permanentmagnet 24 möglichst vollständig über dem Elektromagneten 15 liegt. Ferner kann hierdurch ein elektromagnetischer Halt des inneren Gargefäßes 2 im äußeren Gargefäß 1 erreicht werden.

Umgekehrt kann das innere Gargefäß 2 vom Benutzer vergleichsweise einfach aus dem äußeren Gargefäß 1 entnommen werden, indem der Elektromagnet 15 von der Steuerungseinheit 16 umgepolt und somit das äußere Gargefäß 2 aus dem Innenraum 13 des Gargefäßes 1 entlang der vertikalen Achse Z nach oben herausgedrückt wird und somit der Rand 12c der äußeren Gargefäßwandung 12 vom Benutzer hintergriffen werden kann, siehe zum Beispiel Figur 3.

Das fertigverbundene zweiteilige Gargeschirr 1, 2 kann vom Benutzer auf die bereits erwähnte Kochstelle 31 einer Kochfeldplatte 30 eines Kochfelds 3 aufgestellt werden, siehe Figur 8, um dort für einen Garprozess verwendet zu werden. Eine entsprechende Bedienung des Kochfelds 3 kann über dessen Anzeige-/Bedienelement 32 erfolgen. Dabei kann ein Datenaustausch von Messwerten und/oder Weisungen mittels eines Sende-/Empfangselements 33 zwischen dem Kochfeld 3, einem mobilen Endgerät 4 in Form eines Smartphones 4 sowie dem erfindungsgemäßen zweiteiligen Gargeschirr 1, 2 erfolgen. Entsprechend kann vom Benutzer über das Kochfeld 3 oder über das Smartphone 4 mittels einer drahtlosen Datenübertragung A der Elektromagnet 15 mittels der Steuerungseinheit 16 zum Halten oder zum Abstoßen des inneren Gargefäßes 2 aktiviert werden, wie zuvor beschrieben. Auch können auf diesem Wege mittels der drahtlosen Datenübertragung A Sensordaten beispielsweise des Wiegesensors 18 vom zweiteiligen Gargeschirr 1, 2 an das Kochfeld 3 und/oder an das Smartphone 4 übertragen werden. Dabei kann bei der Erfassung der Sensordaten des Wiegesensors 18 der elektromagnetische Halt zwischen Elektromagnet 15 und Permanentmagnet 24 für die Dauer der Erfassung kurzzeitig gelöst werden, damit die Haltekräfte des Elektromagneten 15 den Messwert nicht beeinflussen.

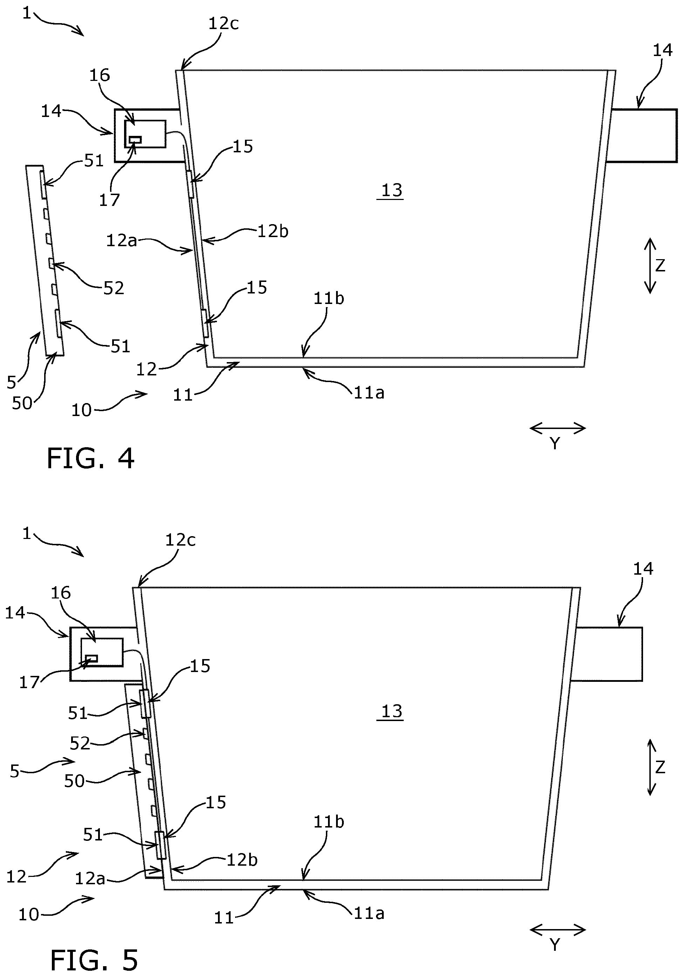

Figur 4 zeigt einen Längsschnitt durch ein erfindungsgemäßes zweiteiliges Gargeschirr 1, 2 gemäß einem zweiten Ausführungsbeispiel mit separiertem Gargefäß 1 und Sensorträger 5. Figur 5 zeigt die Darstellung der Figur 4 mit zusammengefügtem Gargefäß 1 und Sensorträger 5 in einem anziehenden Zustand.

In diesem Fall ist ein Sensorträger 5 in Form einer Sensorleiste 5 vorgesehen, um wie zuvor beschrieben elektromagnetisch an der Außenseite 12 a der Gargefäßwandung 12 eines Gargefäßes 1 gehalten zu werden. Der Sensorträger 5 weist hierzu einen vertikalen länglichen Trägerkörper 50 auf, welcher entlang der vertikalen Achse Z oben und unten jeweils einen Permanentmagneten 51 aufweist. Zwischen den beiden Permanentmagneten 51 sind mehrere Sensorelemente 52 in Form von Temperatursensoren 52 der Außenseite 12a der Gargefäßwandung 12 zugewandt angeordnet. Das Gargefäß 1 weist hierzu korrespondierend zwei Elektromagnete 15 auf, welche nach außen gewandt an der Außenseite 12a der Gargefäßwandung 12 angeordnet sind, siehe zum Beispiel Figur 4.

Der Sensorträger 5 kann nun vom Benutzer mit seinen Permanentmagneten 51 an die Elektromagnete 15 der Außenseite 12a der Gargefäßwandung 12 gehalten werden. Dann kann der Benutzer die Elektromagnete 15 aktivieren. Hierdurch kann der Sensorträger 5, vergleichbar dem inneren Gargefäß 2 des erfindungsgemäßen zweiteiligen Gargeschirrs 1, 2 gemäß des ersten Ausführungsbeispiels, am Gargefäß 1 des zweiten Ausführungsbeispiels gehalten und positioniert werden.

In diesem Fall kann für die Dauer der Erfassung der Sensordaten der Temperatursensoren 52 von der Steuerungseinheit 16 die Bestromung der Elektromagnete 15 derart erhöht werden, so dass der Sensorträger 15 an die Außenseite 12a der Gargefäßwandung 12 herangezogen oder herangedrückt werden kann, um hierdurch den Kontakt der Temperatursensoren 52 mit der Außenseite 12a der Gargefäßwandung 12 zu erhöhen und dadurch sicherzustellen. Dies kann die Temperaturerfassung verbessern.

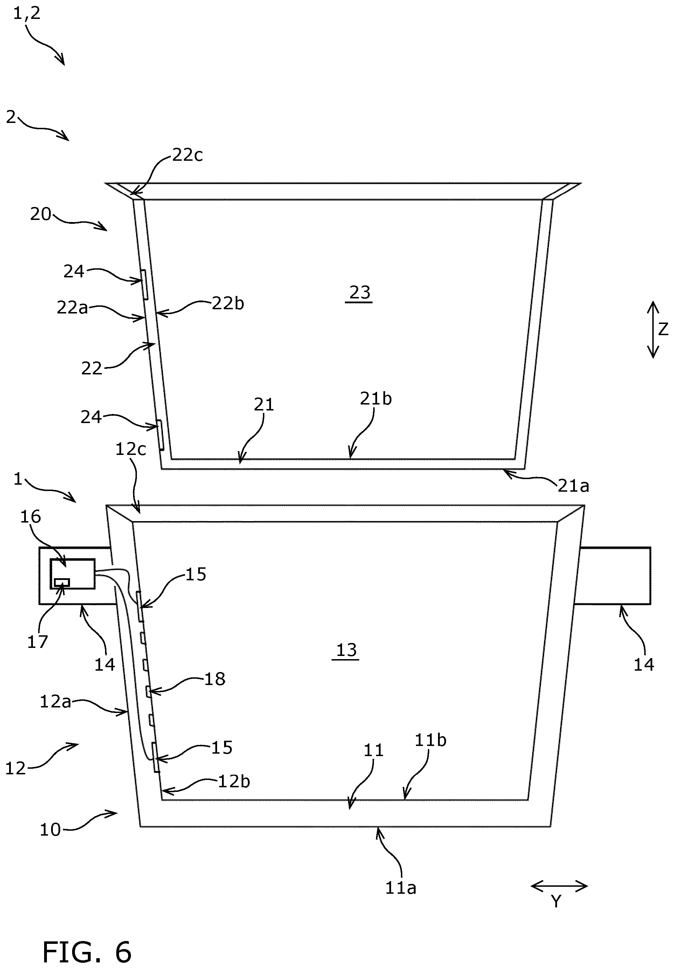

Figur 6 zeigt einen Längsschnitt durch ein erfindungsgemäßes zweiteiliges Gargeschirr 1, 2 gemäß eines dritten Ausführungsbeispiels mit separierten Gargefäßen 1, 2. Figur 7 zeigt die Darstellung der Figur 6 mit zusammengefügten Gargefäßen 1, 2 in einem anziehenden Zustand.

Das zweiteilige Gargeschirr 1, 2 gemäß dem dritten Ausführungsbeispiel entspricht dem zweiteiligen Gargeschirr 1, 2 gemäß dem ersten Ausführungsbeispiel mit dem Unterschied, dass in diesem Fall auf den Wiegesensor 18 verzichtet wird. Stattdessen sind mehrere Temperatursensoren 18, vergleichbar den Temperatursensoren 52 des Sensorträgers 5 gemäß dem zweiten Ausführungsbeispiel, nach innen zum Innenraum 13 hin gewandt an der Innenseite 12b der äußeren Gargefäßwandung 12 angeordnet. Auch sind die Elektromagnete 15 des äußeren Gargefäßes 1 sowie die Permanentmagnete 24 des inneren Gargefäßes 2 wie beim Sensorträger 5 des zweiten Ausführungsbeispiels beschrieben angeordnet, siehe Figur 6.

Wird nun das innere Gargefäß 2 in den Innenraum 13 des äußeren Gargefäßes 1 eingesetzt und die Elektromagnete 15 aktiviert, siehe Figur 7, so wird in diesem Fall das innere Gargefäß 2 dort an die Innenseite 12b der äußeren Gargefäßwandung 12 des äußeren Gargefäßes 1 elektromagnetisch herangezogen, wo die Elektromagnete 15 und Temperatursensoren 18 angeordnet sind. Auch dies kann mit einer entsprechend starken Bestromung der Elektromagnete 15 erfolgen, wie beim zweiten Ausführungsbeispiel beschrieben. Somit kann auch in diesem Fall hierdurch der Kontakt der Temperatursensoren 18 der äußeren Gargefäßwandung 12 mit der inneren Gargefäßwandung 22 verstärkt und hierdurch die sensorische Erfassung der Temperatur der inneren Gargefäßwandung 22 verbessert werden.

### Bezugszeichenliste (Bestandteil der Beschreibung)

- A: drahtlose Datenübertragung

- X: Längsachse; Tiefe; Länge
- Y: Querachse; Breite
- Z: vertikale Achse; Höhe
- X, Y: Horizontale; horizontale Ebene

- 1, 2: zweiteiliges Gargeschirr; zweiteiliger Topf

- 1: (erstes, äußeres) Gargefäß
- 10: (erster, äußerer) Gargefäßkörper
- 11: (erster, äußerer) Gargefäßboden
- 11a: Unterseite des (ersten, äußeren) Gargefäßbodens 11
- 11b: Oberseite des (ersten, äußeren) Gargefäßbodens 11
- 12: (erste, äußere) Gargefäßwandung
- 12a: Außenseite der (ersten, äußeren) Gargefäßwandung 12
- 12b: Innenseite der (ersten, äußeren) Gargefäßwandung 12
- 12c: Rand der (ersten, äußeren) Gargefäßwandung 12
- 13: Innenraum
- 14: Gargeschirrgriffe
- 15: Elektromagnete
- 16: Steuerungseinheit; Elektronik
- 17: Sende-/Empfangselement
- 18: Sensorelemente; Wiegesensor; Temperatursensoren

- 2: zweites, inneres Gargefäß
- 20: zweiter, innerer Gargefäßkörper
- 21: zweiter, innerer Gargefäßboden
- 21a: Unterseite des zweiten, inneren Gargefäßbodens 21
- 21b: Oberseite des zweiten, inneren Gargefäßbodens 21
- 22: zweite, innere Gargefäßwandung
- 22a: Außenseite der zweiten, inneren Gargefäßwandung 22
- 22b: Innenseite der zweiten, inneren Gargefäßwandung 22
- 22c: Rand der zweiten, inneren Gargefäßwandung 22
- 23: Garraum
- 24: Permanentmagnete

- 3: Kochfeld
- 30: Kochfeldplatte
- 31: Kochstellen
- 32: Anzeige-/Bedienelement
- 33: Sende-/Empfangselement

- 4: mobiles Endgerät; Smartphone

- 5: Sensorträger; Sensorleiste
- 50: Trägerkörper
- 51: Permanentmagnete
- 52: Sensorelemente; Temperatursensoren

## Patentansprüche

1. Zweiteiliges Gargeschirr (1, 2)
mit einem ersten, vorzugsweise äußeren, Gargefäß (1), welches ausgebildet ist, auf einer Kochstelle (31) eines Kochfelds (3) erhitzt zu werden, und
mit einem zweiten, vorzugweise inneren, Gargefäß (2), welches ausgebildet ist, von dem ersten Gargefäß (1), vorzugsweise in einem Innenraum (13) des ersten Gargefäßes (1), aufgenommen zu werden,
**dadurch gekennzeichnet, dass**
das erste Gargefäß (1) und das zweite Gargefäß (2) ausgebildet sind, das zweite Gargefäß (2) magnetisch an dem ersten Gargefäß (1), vorzugsweise im Innenraum (13) des ersten Gargefäßes (1), zu halten
wobei das erste Gargefäß (1) wenigstens einen Elektromagneten (15) aufweist, welcher ausgebildet und eingerichtet ist, das zweite Gargefäß (2), vorzugsweise einen korrespondierenden Permanentmagneten (24) des zweiten Gargefäßes (2), elektromagnetisch anzuziehen, oder umgekehrt.

2. Zweiteiliges Gargeschirr (1, 2) nach Anspruch 1,
wobei der Elektromagnet (15) ferner eingerichtet ist, den Permanentmagneten (24) elektromagnetisch abzustoßen.

3. Zweiteiliges Gargeschirr (1, 2) nach Anspruch 1 oder 2,
wobei der Elektromagnet (15) entlang der vertikalen Achse (Z) einem ersten Gargefäßboden (11) abgewandt im oberen Bereich des ersten Gargefäßes (1), vorzugweise an einem Rand (12c) einer ersten Gargefäßwandung (12), und der Permanentmagnet (24) entlang der vertikalen Achse (Z) einem zweiten Gargefäßboden (21) abgewandt im oberen Bereich des zweiten Gargefäßes (2), vorzugweise an einem Rand (22c) einer zweiten Gargefäßwandung (22), angeordnet ist, oder umgekehrt.

4. Zweiteiliges Gargeschirr (1, 2) nach einem der Ansprüche 1 bis 3
mit mehreren Elektromagneten (15) und mehreren korrespondierenden Permanentmagneten (24),
wobei die Elektromagnete (15) vorzugweise in der Umfangsrichtung einer ersten Gargefäßwandung (12), vorzugsweise eines Rands (12c) einer ersten Gargefäßwandung (12), und die Permanentmagnete (24) in der Umfangsrichtung einer zweiten Gargefäßwandung (22), vorzugsweise eines Rands (22c) einer zweiten Gargefäßwandung (22), verteilt, vorzugsweise gleichmäßig verteilt, angeordnet sind, oder umgekehrt.

5. Zweiteiliges Gargeschirr (1, 2) nach einem der Ansprüche 1 bis 4
mit einer Steuerungseinheit (16), welche ausgebildet und eingerichtet ist, den Elektromagneten (15) zu betreiben.

6. Zweiteiliges Gargeschirr (1, 2) nach Anspruch 5
mit einem Sende- und/oder Empfangselement (17), welches ausgebildet und eingerichtet ist, drahtlos Daten zu senden und/oder zu empfangen.

7. Zweiteiliges Gargeschirr (1, 2) nach Anspruch 5 oder 6,
wobei die Steuerungseinheit (16), vorzugsweise und das Sende- und/oder Empfangselement (17), in einem Gargeschirrgriff (14), vorzugsweise des ersten Gargefäßes (1), angeordnet ist.

8. Zweiteiliges Gargeschirr (1, 2) nach einem der vorangehenden Ansprüche,
wobei das erste Gargefäß (1) wenigstens ein Sensorelement (18), vorzugsweise einen entlang der vertikale Achse (Z) ausgerichteten Wiegesensor (18) und/oder einen Temperatursensor (18), aufweist, welches zwischen dem ersten Gargefäß (1) und dem zweiten Gargefäß (2) angeordnet ist, oder umgekehrt.

9. Zweiteiliges Gargeschirr (1, 2) nach einem der Ansprüche 1 bis 7 und nach Anspruch 8,
wobei das zweiteilige Gargeschirr (1, 2), vorzugsweise eine Steuerungseinheit (16) des zweiteiligen Gargeschirrs (1, 2), ausgebildet und eingerichtet ist, den elektromagnetischen Halt des zweiten Gargefäßes (2) an dem ersten Gargefäß (1), vorzugsweise im Innenraum (13) des ersten Gargefäßes (1), zu erhöhen, um eine Messung mittels des Sensorelements (18) aufzuführen.

10. Zweiteiliges Gargeschirr (1, 2) nach einem der Ansprüche 1 bis 7 und nach Anspruch 8 oder 9,
wobei das zweiteilige Gargeschirr (1, 2), vorzugsweise eine Steuerungseinheit (16) des zweiteiligen Gargeschirrs (1, 2), ausgebildet und eingerichtet ist, den elektromagnetischen Halt des zweiten Gargefäßes (2) an dem ersten Gargefäß (1), vorzugsweise im Innenraum (13) des ersten Gargefäßes (1), aufzuheben, um eine Messung mittels des Sensorelements (18) auszuführen.

11. Zweiteiliges Gargeschirr (1, 2) nach einem der vorangehenden Ansprüche,
wobei das erste Gargefäß (1) und das zweite Gargefäß (2) zueinander korrespondierend asymmetrisch und/oder formschlüssig ausgebildet sind.

12. Zweiteiliges Gargeschirr (1, 2) nach einem der vorangehenden Ansprüche,
wobei das zweite Gargefäß (2) einen zweiten Gargefäßboden (21) und eine entlang der vertikalen Achse (Z) vom zweiten Gargefäßboden (21) nach oben ragende zweite Gargefäßwandung (22) aufweist, welche einen Garraum (23) abschnittsweise umschließen.

13. Zweiteiliges Gargeschirr (1, 5)
mit einem Gargefäß (1), welches ausgebildet ist, auf einer Kochstelle (31) eines Kochfelds (3) erhitzt zu werden,
**gekennzeichnet durch**
wenigstens einen Sensorträger (5), welcher wenigstens ein Sensorelement (52), vorzugsweise einen Temperatursensor (52), aufweist,
wobei das Gargefäß (1) und der Sensorträger (5) ausgebildet sind, den Sensorträger (5) magnetisch an dem ersten Gargefäß (1), vorzugsweise an einer Gargefäßwandung (12) des ersten Gargefäßes (1), zu halten
wobei das Gargefäß (1) wenigstens einen Elektromagneten (15) aufweist, welcher ausgebildet und eingerichtet ist, den Sensorträger (5), vorzugsweise einen korrespondierenden Permanentmagneten (51), elektromagnetisch anzuziehen, oder umgekehrt.

## Claims

1. Two-piece cooking utensil (1, 2)
comprising a first, preferably outer, cooking vessel (1) which is designed to be heated on a hot plate (31) of a hob (3), and
comprising a second, preferably inner, cooking vessel (2) which is designed to be received by the first cooking vessel (1), preferably in an interior (13) of the first cooking vessel (1),
**characterised in that**
the first cooking vessel (1) and the second cooking vessel (2) are designed to hold the second cooking vessel (2) magnetically on the first cooking vessel (1), preferably in the interior (13) of the first cooking vessel (1),
wherein the first cooking vessel (1) comprises at least one electromagnet (15) which is designed and configured to electromagnetically attract the second cooking vessel (2), preferably a corresponding permanent magnet (24) of the second cooking vessel (2), or vice versa.

2. Two-piece cooking utensil (1, 2) according to claim 1,
wherein the electromagnet (15) is further configured to electromagnetically repel the permanent magnet (24).

3. Two-piece cooking utensil (1, 2) according to either claim 1 or claim 2,
wherein the electromagnet (15) is arranged along the vertical axis (Z) facing away from a first cooking vessel base (11) in the upper region of the first cooking vessel (1), preferably on an edge (12c) of a first cooking vessel wall (12), and the permanent magnet (24) is arranged along the vertical axis (Z) facing away from a second cooking vessel base (21) in the upper region of the second cooking vessel (2), preferably on an edge (22c) of a second cooking vessel wall (22), or vice versa.

4. Two-piece cooking utensil (1, 2) according to any of claims 1 to 3,
comprising a plurality of electromagnets (15) and a plurality of corresponding permanent magnets (24),
wherein the electromagnets (15) are preferably distributed, preferably uniformly distributed, in the circumferential direction of a first cooking vessel wall (12), preferably of an edge (12c) of a first cooking vessel wall (12), and the permanent magnets (24) are distributed, preferably uniformly distributed, in the circumferential direction of a second cooking vessel wall (22), preferably of an edge (22c) of a second cooking vessel wall (22), or vice versa.

5. Two-piece cooking utensil (1, 2) according to any of claims 1 to 4,
comprising a control unit (16) which is designed and configured to operate the electromagnet (15).

6. Two-piece cooking utensil (1, 2) according to claim 5,
comprising a transmitting and/or receiving element (17) which is designed and configured to transmit and/or receive data wirelessly.

7. Two-piece cooking utensil (1, 2) according to either claim 5 or claim 6,
wherein the control unit (16), and preferably the transmitting and/or receiving element (17), is arranged in a cooking utensil handle (14), preferably of the first cooking vessel (1).

8. Two-piece cooking utensil (1, 2) according to any of the preceding claims,
wherein the first cooking vessel (1) comprises at least one sensor element (18), preferably a weighing sensor (18) aligned along the vertical axis (Z) and/or a temperature sensor (18), which is arranged between the first cooking vessel (1) and the second cooking vessel (2), or vice versa.

9. Two-piece cooking utensil (1, 2) according to any of claims 1 to 7 and according to claim 8,
wherein the two-part cooking utensil (1, 2), preferably a control unit (16) of the two-part cooking utensil (1, 2), is designed and configured to increase the electromagnetic hold of the second cooking vessel (2) on the first cooking vessel (1), preferably in the interior (13) of the first cooking vessel (1), in order to carry out a measurement by means of the sensor element (18).

10. Two-piece cooking utensil (1, 2) according to any of claims 1 to 7 and according to either claim 8 or claim 9,
wherein the two-part cooking utensil (1, 2), preferably a control unit (16) of the two-part cooking utensil (1, 2), is designed and configured to release the electromagnetic hold of the second cooking vessel (2) on the first cooking vessel (1), preferably in the interior (13) of the first cooking vessel (1), in order to carry out a measurement by means of the sensor element (18).

11. Two-piece cooking utensil (1, 2) according to any of the preceding claims,
wherein the first cooking vessel (1) and the second cooking vessel (2) are designed to correspond to one another in an asymmetrical and/or form-fitting manner.

12. Two-piece cooking utensil (1, 2) according to any of the preceding claims,
wherein the second cooking vessel (2) comprises a second cooking vessel base (21) and a second cooking vessel wall (22) projecting upwards along the vertical axis (Z) from the second cooking vessel base (21), which partially enclose a cooking chamber (23).

13. Two-piece cooking utensil (1, 5)
comprising a cooking vessel (1) which is designed to be heated on a hot plate (31) of a hob (3),
**characterised by**
at least one sensor carrier (5) which comprises at least one sensor element (52), preferably a temperature sensor (52),
wherein the cooking vessel (1) and the sensor carrier (5) are designed to hold the sensor carrier (5) magnetically on the first cooking vessel (1), preferably on a cooking vessel wall (12) of the first cooking vessel (1)
wherein the cooking vessel (1) comprises at least one electromagnet (15) which is designed and configured to electromagnetically attract the sensor carrier (5), preferably a corresponding permanent magnet (51), or vice versa.

## Revendications

1. Ustensile de cuisson en deux parties (1, 2)
comportant un premier récipient de cuisson (1), de préférence extérieur, qui est conçu pour être chauffé sur un emplacement de cuisson (31) d'une plaque de cuisson (3), et
comportant un second récipient de cuisson (2), de préférence intérieur, qui est conçu pour être reçu par le premier récipient de cuisson (1), de préférence dans un espace intérieur (13) du premier récipient de cuisson (1),
**caractérisé en ce que**
le premier récipient de cuisson (1) et le second récipient de cuisson (2) sont conçus pour maintenir de manière magnétique le second récipient de cuisson (2) sur le premier récipient de cuisson (1), de préférence dans l'espace intérieur (13) du premier récipient de cuisson (1),
dans lequel le premier récipient de cuisson (1) présente au moins un électroaimant (15) qui est conçu et réalisé pour attirer de manière électromagnétique le second récipient de cuisson (2), de préférence un aimant permanent (24) correspondant du second récipient de cuisson (2), ou inversement.

2. Ustensile de cuisson en deux parties (1, 2) selon la revendication 1,
dans lequel l'électroaimant (15) est en outre réalisé pour repousser de manière électromagnétique l'aimant permanent (24).

3. Ustensile de cuisson en deux parties (1, 2) selon la revendication 1 ou 2,
dans lequel l'électroaimant (15) est disposé le long de l'axe vertical (Z) à l'opposé d'un premier fond de récipient de cuisson (11) dans la zone supérieure du premier récipient de cuisson (1), de préférence sur un bord (12c) d'une première paroi de récipient de cuisson (12), et l'aimant permanent (24) est disposé le long de l'axe vertical (Z) à l'opposé d'un second fond de récipient de cuisson (21) dans la zone supérieure du second récipient de cuisson (2), de préférence sur un bord (22c) d'une seconde paroi de récipient de cuisson (22), ou inversement.

4. Ustensile de cuisson en deux parties (1, 2) selon l'une des revendications 1 à 3,
comportant plusieurs électroaimants (15) et plusieurs aimants permanents (24) correspondants,
dans lequel les électroaimants (15) sont de préférence disposés de manière à être répartis, de préférence uniformément répartis, dans la direction circonférentielle d'une première paroi de récipient de cuisson (12), de préférence d'un bord (12c) d'une première paroi de récipient de cuisson (12), et les aimants permanents (24) sont de préférence disposés de manière à être répartis, de préférence uniformément répartis, dans la direction circonférentielle d'une seconde paroi de récipient de cuisson (22), de préférence d'un bord (22c) d'une seconde paroi de récipient de cuisson (22), ou inversement.

5. Ustensile de cuisson en deux parties (1, 2) selon l'une des revendications 1 à 4,
comportant une unité de commande (16) qui est configurée et réalisée pour faire fonctionner les électroaimants (15).

6. Ustensile de cuisson en deux parties (1, 2) selon la revendication 5
comportant un élément de transmission et/ou de réception (17) qui est configuré et réalisé pour transmettre et/ou recevoir des données sans fil.

7. Ustensile de cuisson en deux parties (1, 2) selon la revendication 5 ou 6,
dans lequel l'unité de commande (16), de préférence et l'élément de transmission et/ou de réception (17), sont disposés dans une poignée d'ustensile de cuisson (14), de préférence du premier récipient de cuisson (1).

8. Ustensile de cuisson en deux parties (1, 2) selon l'une des revendications précédentes,
dans lequel le premier récipient de cuisson (1) présente au moins un élément formant capteur (18), de préférence un capteur de pesage (18) orienté le long de l'axe vertical (Z) et/ou un capteur de température (18), lesquels sont disposés entre le premier récipient de cuisson (1) et le second récipient de cuisson (2), ou inversement.

9. Ustensile de cuisson en deux parties (1, 2) selon l'une des revendications 1 à 7 et selon la revendication 8,
dans lequel l'ustensile de cuisson en deux parties (1, 2), de préférence une unité de commande (16) de l'ustensile de cuisson en deux parties (1, 2), est configuré et réalisé pour augmenter le maintien électromagnétique du second récipient de cuisson (2) sur le premier récipient de cuisson (1), de préférence dans l'espace intérieur (13) du premier récipient de cuisson (1), afin d'effectuer une mesure au moyen de l'élément formant capteur (18).

10. Ustensile de cuisson en deux parties (1, 2) selon l'une des revendications 1 à 7 et selon la revendication 8 ou 9,
dans lequel l'ustensile de cuisson en deux parties (1, 2), de préférence une unité de commande (16) de l'ustensile de cuisson en deux parties (1, 2), est configuré et réalisé pour supprimer le maintien électromagnétique du second récipient de cuisson (2) sur le premier récipient de cuisson (1), de préférence dans l'espace intérieur (13) du premier récipient de cuisson (1), afin d'effectuer une mesure au moyen de l'élément formant capteur (18).

11. Ustensile de cuisson en deux parties (1, 2) selon l'une des revendications précédentes,
dans lequel le premier récipient de cuisson (1) et le second récipient de cuisson (2) sont réalisés de manière à correspondre de manière asymétrique et/ou par complémentarité de forme l'un avec l'autre.

12. Ustensile de cuisson en deux parties (1, 2) selon l'une des revendications précédentes,
dans lequel le second récipient de cuisson (2) présente un second fond de récipient de cuisson (21) et une seconde paroi de récipient de cuisson (22) faisant saillie vers le haut le long de l'axe vertical (Z) depuis le second fond de récipient de cuisson (21), lesquels entourent dans certaines sections un espace de cuisson (23).

13. Ustensile de cuisson en deux parties (1, 5)
comportant un récipient de cuisson (1) qui est conçu pour être chauffé sur un emplacement de cuisson (31) d'une plaque de cuisson (3),
**caractérisé par**
au moins un support de capteur (5) qui présente au moins un élément formant capteur (52), de préférence un capteur de température (52),
dans lequel le récipient de cuisson (1) et le support de capteur (5) sont conçus pour maintenir de manière magnétique le support de capteur (5) sur le premier récipient de cuisson (1), de préférence sur une paroi de récipient de cuisson (12) du premier récipient de cuisson (1),
dans lequel le récipient de cuisson (1) présente au moins un électroaimant (15) qui est conçu et réalisé pour attirer de manière électromagnétique le support de capteur (5), de préférence un aimant permanent (51) correspondant, ou inversement.
